# EUROPEAN PATENT APPLICATION

(11) **EP 1 770 297 A1**
(43) Date of publication of application: **04.04.2007**
(21) Application number: 05753314.3
(22) Date of filing: 27.06.2005
(51) Int. Cl.: F16D 3/06

(54) **SPLINE JOINT AND LUBRICATING AGENT COMPOSITION**

(30) Priority: 29.06.2004 JP 2004191983
(71) Applicant: JTEKT CORPORATION, Chuo-ku Osaka-shi Osaka 542-8502 (JP)
(72) Inventor: KITAHATA, Kouji; c/o JTEKT Corporation , 5-8,, Osaka 542-8502 (JP); KASAHARA, Fumiaki; c/o JTEKT Corporation., 5-8,, Osaka 542-8502 (JP); SHIRAI, Yoshimasa; c/o JTEKT Corporation , 5-8,, Osaka 542-8502 (JP)
(74) Representative: Steil, Christian
(86) International application number: PCT/JP2005/011750
(87) International publication number: WO 2006/001426

(57) **Abstract**

Provided are a spline joint (1) where a section at which a male spline shaft (2) and a female spline shaft (3) mesh is filled with a lubricating agent composition containing a lubricating oil and buffer particles (B), and the lubricating agent composition. Impact caused by meshing of both spline shafts (2, 3) is buffered by the buffer particles (B) placed in the section at which both spline shafts (2, 3) mesh. As a result, chattering sound and sliding resistance can be stably reduced for a longer time without having wearing and peeling which occur in coating.

## Description

### TECHNICAL FIELD

The present invention relates to a spline joint comprising a male spline shaft and a female spline shaft, which are connected with each other so as to be capable of extending and retracting in an axial direction and transmitting a driving power in a rotation direction around the axis, to be used in a steering shaft of an automobile or the like, and to a lubricating agent composition that fills in a meshing portion between the male spline shaft and the female spline shaft of the spline joint.

### BACKGROUND ART

A spline joint is generally constituted by forming splined portions that allow a sliding motion in an axial direction of spline shafts and mesh with each other in a rotation direction so as to transmit a drive power, on the outer circumference of a male spline shaft and on the inner circumference of a female spline shaft, and meshing the splined portions with each other.
In such a spline joint, in order to reduce a chattering sound generated by an impact of the spline shafts meshing with each other, and a sliding resistance, it is a common practice to cover a surface of at least one of the splined portions of the spline shafts that makes contact with the other splined portion with, for example, a resin coating film that has a low friction coefficient or a film of a solid lubricating agent.

For example, Patent Document 1 describes such measures as to cover a surface of a splined portion formed on the outer circumference of a male spline shaft with a resin coating film such as polyphenylene sulfide, polybutylene terephthalate or the like, and include a filler such as calcium carbonate and a solid lubricating agent to the coating film.
Patent Document 1: Japanese Unexamined Patent Publication No. JP, 2001-336543, A (Claims 1 through 3, paragraphs No. 0005 through 0010)

### DISCLOSURE OF THE INVENTION

### Problems to be Solved by the Invention

However, since the spline shafts slide in the axial direction, the coating film wears out to become thinner and may be partially removed when the spline joint is used over a long period of time, thereby leading to a louder chattering sound and a hitch while sliding. In the case of a spline joint used- in a steering shaft of an automobile, particularly a steering shaft of an electric power steering apparatus, a chattering sound or a hitch while steering of an automobile give a driver an uneasy feeling.

An object of the present invention is to provide a spline joint capable of reducing the chattering sound and the sliding resistance without wearing or peeling like a coating film in a stable manner over a longer period of time, and a lubricating agent composition that fills in a meshing portion between a male spline shaft and a female spline shaft of the spline joint.
The spline joint of the present invention comprises a male spline shaft and a female spline shaft that are connected so as to be capable of extending and retracting in an axial direction and transmitting a driving power in a rotation direction around the axis, characterized in that a lubricating agent composition contains a lubricating agent and buffer particles, fills in a meshing portion between the male spline shaft and the female spline shaft of the spline joint.

An average particle diameter of the buffer particles is preferably in a range from 80 to 120% of a clearance provided in the meshing portion between the male spline shaft and the female spline shaft. Young's modulus of the buffer particles is preferably in a range from 0.1 to 1000 MPa.
The buffer particles are preferably made of a cured product comprising a thermosetting urethane resin. The buffer particles are preferably spherical in shape. It is preferable that the lubricating agent composition contains 20 to 300 parts by weight of the buffer particles in proportion to 100 parts by weight of the lubricating agent.

The lubricating agent composition of the present invention, characterized in that contains a lubricating agent and buffer particles and fills in the meshing portion between the male spline shaft and the female spline shaft of the spline joint which comprises the male spline shaft and the female spline shaft that are connected so as to be capable of extending and retracting in the axial direction and transmitting the driving power in the rotation direction around the axis.

### EFFECT OF THE INVENTION

The spline joint of the present invention is capable of reducing the chattering sound, since the buffer particles contained in the lubricating agent composition are interposed between the male spline shaft and the female spline shaft in the meshing portion thereof and absorb the impact of meshing of the shafts. The buffer particles also function like a a microbearing while sliding motion of the spline shafts in the axial direction and therefore, together with the lubricating agent that fills the clearance, reduce the sliding resistance.

Moreover, once a predetermined amount of the lubricating agent composition is placed in the meshing portion between the male spline shaft and the female spline shaft, a quantity of the buffer particles required to reduce the chattering sound and the sliding resistance is always supplied to the meshing portion and, even when the lubricant falls into shortage, a proper amount of the buffer particles can be replenished to the meshing portion simply by supplying the same lubricating agent composition. Therefore, unlike the coating film that loses the function when it is worn or peeled off, the lubricating agent composition maintains the function to reduce the chattering sound and the sliding resistance over a longer period of time.

Thus, the function of the buffer particles enables the spline joint of the present invention to reduce the chattering sound and the sliding resistance in a stable manner over a longer period of time, compared with the film.
An average particle diameter of the buffer particles is preferably in a range from 80 to 120% of a clearance provided in the meshing portion between the male spline shaft and the female spline shaft in order to fill in the clearance of the meshing portion between the male spline shaft and the female spline shaft as uniformly as possible so as to efficiently reduce the chattering sound and satisfactorily reduce the sliding resistance.

When the buffer particles are made of a cured product comprising a thermosetting urethane resin, the chattering sound can be more efficiently reduced since the cured resin has both proper hardness and resiliency that are desirable for a buffer material. A use of the buffer particles having a spherical particle shape improves a fluidity of the lubricating agent composition so as to reduce the sliding resistance further.
It is preferable that the lubricating agent composition contains 20 to 300 parts by weight of the buffer particles in proportion to 100 parts by weight of the lubricating agent in order to fill in the clearance of the meshing portion between the male spline shaft and the female spline shaft with the buffer particles as uniformly as possible so as to efficiently reduce the chattering sound and satisfactorily reduce the sliding resistance.

Since the lubricating agent composition of the present invention contains the lubricating agent and the buffer particles, once a predetermined amount of the lubricating agent composition is placed in the meshing portion between the male spline shaft and the female spline shaft, a quantity of the buffer particles required to reduce the chattering sound and the sliding resistance is always supplied to the meshing portion and, even when the lubricant falls into shortage, a proper amount of the buffer particles can be replenished to the meshing portion simply by supplying the same lubricating agent composition. Therefore, unlike the conventional coating film that loses the function when it is worn or peeled off, the lubricating agent composition maintains the function to reduce the chattering sound and the sliding resistance over a longer period of time.

### BRIEF DESCRIPTION OF THE DRAWINGS

Fig. 1 is an enlarged sectional view of a main portion of a spline joint according to one embodiment of the present invention, showing a clearance between a splined portion of a male spline shaft and a splined portion of a female spline shaft connected with each other being filled with a lubricating agent composition.
Fig. 2 is a perspective view of the splined portion of the male spline shaft provided in the spline joint.
Fig. 3 is a partially cutaway perspective view of the splined portion of the female spline shaft connected with the male spline shaft.
Fig. 4 is a sectional view showing the splined portions of the spline shafts connected with each other.

### EMBODIMENTS OF THE INVENTION

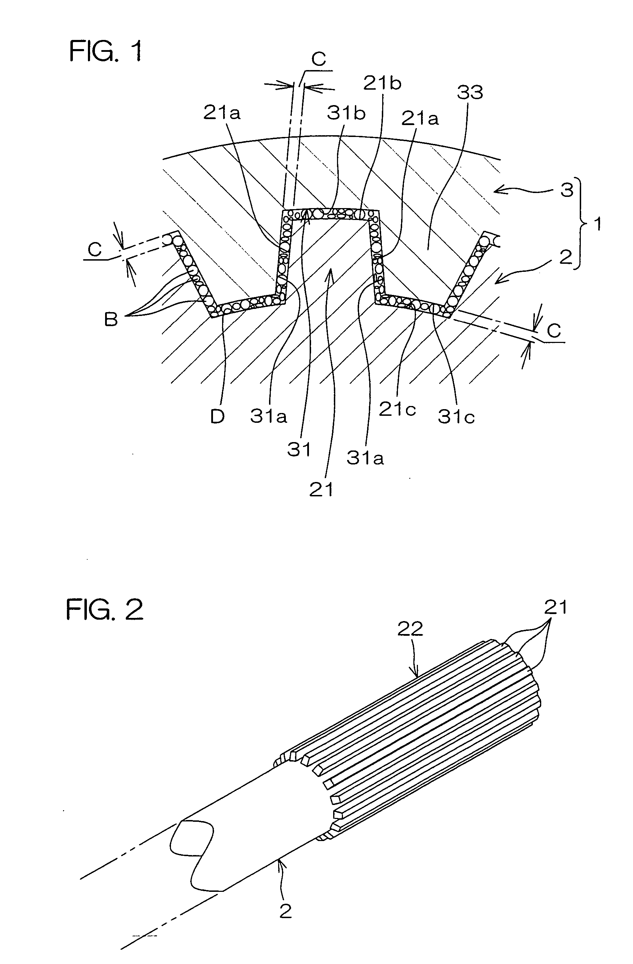

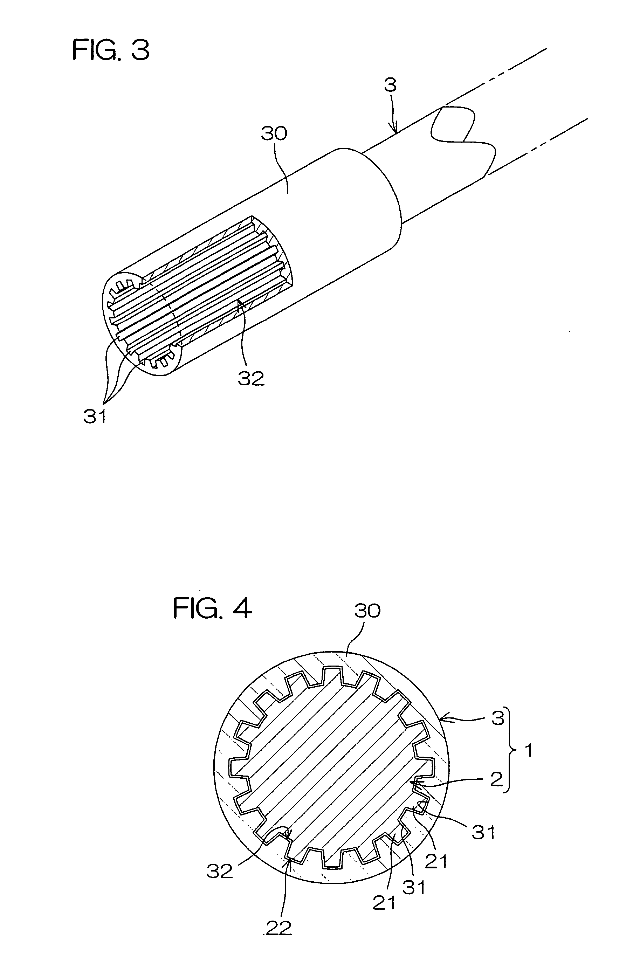

Fig. 1 is an enlarged sectional view of a main portion of a spline joint according to one embodiment of the present invention, showing a clearance between a splined portion of a male spline shaft and a splined portion of a female spline shaft connected with each other being filled with a lubricating agent composition. Fig. 2 is a perspective view of the splined portion of the male spline shaft provided in the spline joint. Fig. 3 is a partially cutaway perspective view of the splined portion of the female spline shaft connected with the male spline shaft. Fig. 4 is a sectional view showing the splined portions of the spline shafts connected with each other.

With reference to the drawings described above, a spline joint 1 of this example itself is constituted similarly to the prior art. That is, with reference to Fig. 1, Fig. 2 and Fig. 4, the spline joint 1 comprises a male spline shaft 2 and a female spline shaft 3, of which the male spline shaft 2 has a multitude of keys 21 formed, so as to protrude from the outer circumferential surface outward in the radial direction and run parallel to the axial direction of the male spline shaft 2 at equal intervals in the circumferential direction on the outer circumferential surface that makes contact with the female spline shaft 3, thereby constituting a male splined portion 22.

With reference to Fig. 1, Fig. 3 and Fig. 4, the female spline shaft 3 has an end portion 30 that connects with the male spline shaft 2, formed in a tubular shape into which the male spline shaft 22 is inserted, with a multitude of key ways 31 mesh with the keys 21 of the male spline shaft 22 are formed, from the inner circumferential surface outward in the radial direction to run parallel to the axial direction of the female spline shaft 3, dented at equal intervals in the circumferential direction on the inner circumferential surface, thereby constituting the female splined portion 32.

With reference to Fig. 1 and Fig. 4, the male splined portion 22 is inserted into the female splined portion 32 while meshing the keys 21 of the male splined portion 22 into the key ways 31 of the female splined portion 32, so that the two spline shafts 2, 3 are connected with each other so as to be capable of extending and retracting in the axial direction and transmitting a driving power in the rotation direction around the axis.
With reference to Fig. 1, a clearance C is provided between the keys 21 of the male splined portion 22 and the key ways 31 of the female splined portion 32. Specifically, the clearance C is provided between both side faces 21a of the key 21 and both side faces 31a of the key way 31 that opposes the former, between the top face 21b of the key 21 and the bottom face 31b of the key way 31 that opposes the former, and between the bottom face 21c interposed by the adjacent keys 21 that correspond to the outer circumferential surface of the male spline shaft 2 and the top face 31c of a ridge 33 interposed by the adjacent key ways 31 that opposes the former.

The lubricating agent composition that contains buffer particles B fills in a space D formed between the splined portions 22, 32 when the male spline shaft 22 and the female spline shaft 32 are connected with the clearance C.
An average particle diameter of the buffer particles B contained in the lubricating agent composition is preferably in a range from 80 to 120% of the clearance C provided in the mesh between the keys 21 of the male splined portion 22 and the key ways 31 of the female splined portion 32.

When the average particle diameter of the buffer particles B is less than 80% of the clearance C, the particles are too small as a whole, and the effect of the buffer particles interposed between the male spline shaft 2 and the female spline shaft 3 in the meshing portion thereof to absorb the impact of meshing of the shafts and reduce the chattering sound may not be achieved satisfactorily. When the average particle diameter of the buffer particles B is larger than 120% of the clearance C, the particles are too large as a whole to enter the space D with a part thereof left behind, eventually resulting in a failure to fill in the space D with the required quantity of the buffer particles B and achieve the sufficient effect of reducing the chattering sound.

In either of the cases described above, it is difficult to maintain the axial lines of the spline shafts 2, 3 aligned with each other when, for example, an external force is applied, and the shafts are likely to get out of alignment. When the spline shafts slide with respect to each other while being misaligned, the key 21 and the key way 31 may cause scuffing each other, thus leading to damage.
In the case the buffer particles B of a large particle size are forced to enter the space D, the buffer particles B collapse under pressure between the external surface of the key 21 and the inner surface of the key way 31 that constitute the space D. This causes not only the buffer particles unable to function like a microbearing while sliding motion of the spline shafts 2, 3 in the axial direction, but also hinders the sliding motion, thus increasing the sliding resistance.

The buffer particles B having the average particle diameter in the range described above, in contrast, fill in the space D substantially uniformly. Moreover, since the buffer particles B contain a small quantity or none at all of small particles that have less effect of reducing the chattering sound or large particles that may increase the sliding resistance, namely particles of sizes not included within the range described above, it is possible to reduce the chattering sound more effectively and reduce the sliding resistance further. The reduction of the sliding resistance also leads to a mitigation of a pulling feeling at sliding.

In addition, when the buffer particles B having the average particle diameter within the range described above fill in the space D substantially uniformly, the axial lines of the spline shafts 2, 3 can be prevented from getting out of alignment and the state of alignment of the shafts can be maintained even when, for example, an external force is applied. As a result, the key 21 and the key way 31 can be prevented from scuffing each other and causing damage.
The average particle diameter of the buffer particles B is preferably 90% or more, and more preferably 95% or more of the clearance C, in the range described above, in order to more efficiently reduce the chattering sound while preventing the axial lines from getting out of alignment. Also, the average particle diameter of the buffer particles B is more preferably 110% or less, and further more preferably 105% or less of the clearance C, in the range described above, in order to more efficiently reduce the chattering sound and satisfactorily reduce the sliding resistance.

While the range of the average particle diameter of the buffer particles B is not specified, it is preferably in a range from 5 to 200 µm, and more preferably in a range from 10 to 50 µm, in order to maintain the proportion of the particle size to the clearance C within the range described above.
The shape of the buffer particles B is preferably spherical, granular, cylindrical, barrel-shaped or the like, and the spherical particle is particularly preferable in order to improve the fluidity of the lubricating agent composition so as to make it easier to fill in the space D, and have the buffer particles function like a microbearing while filling in the space D and reduce the sliding resistance of the spline shafts 2, 3.

Young's modulus, namely the modulus of elasticity, of the buffer particles B is preferably in a range from 0.1 to 1000 MPa. The buffer particles B having the Young's modulus lower than 0.1 MPa are too soft and may not achieve a sufficient effect of absorbing the impact of meshing of the male spline shaft 2 and the female spline shaft 3 so as to reduce the chattering sound, even when the space D is filled thereby substantially uniformly as shown in Fig. 1.

There is also a possibility that, when an external force is applied, a sufficient effect of preventing the axial lines of the spline shafts 2, 3 from getting out of alignment and maintaining the state of alignment of the shafts may not be achieved, thus resulting in the shafts sliding while being misaligned and the key 21 and the key way 31 scuffing each other leading to damage. On the other hand, the buffer particles B having the Young's modulus higher than 1000 MPa are too hard to achieve the sufficient effect of reducing the chattering sound.

In the range described above, the Young's modulus of the buffer particles B is particularly preferably 10 MPa or higher, and more preferably 20 MPa or higher, in order to ensure proper hardness of the buffer particles B, prevent the shafts from being misaligned and reduce the chattering sound more satisfactorily. The Young's modulus of the buffer particles is preferably 100 MPa or lower, and more preferably 70 MPa or lower, in order to ensure proper softness of the buffer particles, and reduce the chattering sound more satisfactorily.

While there is no limitation with regards to the other properties of the buffer particles B, a tensile strength of the buffer material that constitutes the buffer particles B is preferably in a range from 1 to 50 MPa. A hardness of the buffer material is preferably 10 or higher in terms of Shore D hardness and 110 or lower in terms of Rockwell hardness (R scale).
The buffer particles B may be made of a rubber or any soft resin that has a rubber-like elasticity. As the soft resin, for example, polyolefin resin, polyamide resin, polyester resin, polyacetal resin, polyphenyleneoxide resin, polyimide resin, fluororesin, thermoplastic or thermosetting urethane resin or the like may be used.

Also, an oil-resistant thermoplastic elastomer may be used such as those based on olefin, urethane, polyester, polyamide or fluorine. Rubbers that can be used include ethylene-propylene copolymerized rubber (EPM), ethylene-propylene-diene copolymerized rubber (EPDM), silicone rubber, urethane rubber (U) and the like.
Among those mentioned above, particles made of a cured product comprising a thermosetting urethane resin are preferably used to make the buffer particles B. Such a constitution of the buffer particles B has advantages of high heat resistance, high durability, and the capability to control the Young's modulus, tensile strength and hardness by adjusting the degree of crosslinking and other property of the urethane resin.

It is preferable that 20 to 300 parts by weight of the buffer particles is contained in proportion to 100 parts by weight of the lubricating agent. A composition with a proportion of the buffer particles B less than 20 parts by weight may not achieve the sufficient effect of absorbing the impact of meshing of both spline shafts 2, 3 and thereby reducing the chattering sound.
There is also a possibility that, when an external force is applied, the sufficient effect of preventing the axial lines of the spline shafts 2, 3 from getting out of alignment and maintaining the state of alignment of the shafts cannot be achieved, thus resulting in the shafts sliding while being misaligned and the key 21 and the key way 31 scuffing each other, thus leading to damage. When a proportion of the buffer particles B is too high beyond 300 parts by weight, on the other hand, a fluidity of the lubricating agent composition becomes low and the sliding resistance of the spline shafts 2, 3 may become higher.

The proportion of the buffer particles B is, in the range described above, more preferably 25 parts by weight or more to 100 parts by weight of the lubricating agent, in order to prevent the shafts from getting out of alignment and more effectively reduce the chattering sound. In order to reduce the sliding resistance, the proportion is preferably 100 parts by weight or less.
Among the liquid lubricant and semi-solid grease, a grease is preferably used as the lubricating agent in which the buffer particles B are to be dispersed. It is preferable that such a grease is used that makes up the lubricating agent composition together with the buffer particles B having a level of consistency of No. 2 to No. 000, particularly No. 2 to No. 0 in terms of NLGI (National Lubricating Grease Institute) number.

The lubricating agent composition having a consistency higher than the level described above has a low fluidity, which may lead to a higher sliding resistance between the spline shafts 2, 3. The lubricating agent composition having a consistency lower than the level described above is likely to be squeezed out of the meshing portion when the spline shafts 2, 3 slide with respect to each other. Accordingly, the buffer particles B may also be squeezed out of the meshing portion in the early stage, thus resulting in diminishing of the effect of the buffer particles B to prevent the shafts from getting out of alignment and reduce the chattering sound in the early stage.

In such a case, the lubricating agent composition may be replenished to the meshing portion as described previously. However, it is preferable to use the lubricating agent composition having a level of consistency in the range described above in order to maintain the effect of one lubrication service over a long period of time for the purpose of labor saving in lubrication.
The grease is made by adding a thickening agent to a base lubricating oil, as in the prior art. While a synthetic hydrocarbon oil (such as poly-α-olefin oil) is preferably used as the base lubricating oil, a synthetic oil such as silicone oil, fluoride oil or ether oil or a mineral oil may also be used. The base lubricating oil may be used in either a single material or two materials or more. A kinetic viscosity of the base lubricating oil is preferably in a range from 5 to 200 mm²/s (at 40°C), particularly from 20 to 100 mm²/s (at 40°C). For the thickening agent, various known thickening materials (soap-based, or non-soap based) may be used.

The grease may contain a solid lubricating agent (molybdenum disulfide, graphite, PTFE, etc.), extreme pressure agent based on phosphorus or sulfur, antioxidizing agent such as tributylphenol or methylphenol, rust preventing agent, metal deactivator, viscosity index improver, oiliness improver or the like added as required.

## Claims

1. A spline joint comprising a male spline shaft and a female spline shaft that are connected so as to be capable of extending and retracting in an axial direction and transmitting a driving power in a rotation direction around the axis, **characterized in that** a lubricating agent composition contains a lubricating agent and buffer particles, fills in a meshing portion between the male spline shaft and the female spline shaft.

2. The spline joint according to claim 1, wherein an average particle diameter of the buffer particles is in a range from 80 to 120% of a clearance provided in the meshing portion between the male spline shaft and the female spline shaft.

3. The spline joint according to claim 1, wherein Young's modulus of the buffer particles is in a range from 0.1 to 1000 MPa.

4. The spline joint according to claim 1, wherein the buffer particles are made of a cured product comprising a thermosetting urethane resin.

5. The spline joint according to claim 1, wherein the buffer particles are spherical particles.

6. The spline joint according to claim 1, wherein the lubricating agent composition contains 20 to 300 parts by weight of the buffer particles in proportion to 100 parts by weight of the lubricating agent.

7. A lubricating agent composition, **characterized in that** comprising a lubricating agent and buffer particles and fills in a meshing portion between the male spline shaft and the female spline shaft of the spline joint which comprises the male spline shaft and female spline shaft that are connected so as to be capable of extending and retracting in the axial direction and transmitting the driving power in the rotation direction around the axis.
